# EUROPEAN PATENT SPECIFICATION

(11) **EP 0 706 974 B1**
(45) Date of publication and mention of the grant of the patent: **19.04.2000**
(21) Application number: 95307205.5
(22) Date of filing: 11.10.1995
(51) Int. Cl.: C02F 1/50, E21B 43/25

(54) **Control of oilfield biofouling**
Bekämpfung biologischer Verschmutzungen bei der Erdölförderung
Procédé pour combattre l'encrassement biologique dans la production du pétrole

(30) Priority: 12.10.1994 GB 9420615
(43) Date of publication of application: 17.04.1996
(73) Proprietor: NALCO/EXXON ENERGY CHEMICALS L.P., Sugarland, Texas 77478 (US)
(72) Inventor: Moody, Stuart Spencer, Sway, Lymington, Hampshire, SO41 6AN (GB); Montgomerie, Henry Trenouth Russell, Aberdeen, AB1 6YN (GB)
(74) Representative: Darby, David Thomas

(56) References cited:
- EP-A- 0 337 624
- EP-A- 0 706 759
- OIL AND GAS JOURNAL, vol. 80, no. 10, 1 January 1982, page 253/254, 256, 261/262, 264 XP000560567 RUSESKA ET AL: "BIOCIDE TESTING AGAINST CORROSION-CAUSING OIL-FIELD BACTERIA HELPS CONTROL PLUGGING"
- DEVELOPMENTS IN INDUSTRIAL MICROBIOLOGY, vol. 29, no. 3, SUPPL, 1 January 1988, pages 247-253, XP000562519 HAACK T K ET AL: "THE EVALUATION OF BIOCIDE EFFICACY AGAINST SESSILE MICROORGANISMS"

## Description

This invention relates to the control of biofouling, especially the fouling of equipment used in oilfields. More especially, the invention provides a method of inhibiting bacterial growth, especially the growth of sessile bacteria, in such equipment, especially equipment used in enhancing oil recovery by injecting water into the strata from which oil is being extracted.

It is common practice in the industry to pump water into an oil-bearing formation to increase the proportion of the oil present that may be extracted, by maintaining reservoir pressure or increasing the oil mobility. The surfaces of the flood injection equipment, e.g., pipe walls, are prone to the growth of a bacterial film (biofilm), which increases the energy required to pump water through the system. Further, however, since oxygen is removed from the water before its use in water flooding operations in order to reduce equipment corrosion, the resulting environment is ideal for the growth of anaerobic sulphate reducing bacteria (SRB) in the biofilm. The metabolic activity of SRB in turn leads to accelerated corrosion, filter plugging, and souring of wells and health hazards resulting from the sulphides produced by the action of the SRB.

Numerous methods of controlling bacterial growth are practised, or have been proposed in the literature. One approach is by the occasional application of a biocide at a concentration sufficient to kill substantially all bacteria present. This is time-consuming and expensive, since the bacteria in a biofilm are protected by an extracellular polysaccharide matrix in the biofilm, and sufficient time, typically of the order of 4 to 12 hours, for example about 8 hours, for penetration and action of the active constituent must be allowed. Such treatment must be repeated at intervals, for example, of from 2 to 15 days, typically weekly or twice weekly.

An alternative approach is continuously to incorporate in the water being pumped through the system a biostat, i.e., a material that inhibits bacterial metabolic activity, and which, at least at the concentration used, although not killing substantially all bacteria present, sufficiently controls or inhibits their activity to meet operating requirements.

In EP-B-337624 a combination of the above two methods is employed, wherein a slug dose of a quick-kill biocide is followed by continuous dosing of a biostat. While this treatment, in which the biocide used is an alkanedial and the continuously dosed biostat is an isothiazolone, has proved extremely effective, its acceptance has been limited by the expense of the materials needed for its implementation.

It has now been found that bacterial levels in apparatus subject to bacterial growth may be controlled by the intermittent application of a biostat. It has further been found the biofilm laid down when a biostat is intermittently applied is more readily removed by slug biocide application than when slug biocide dosing is used alone. These findings are surprising given the generally held view that for effective control of bacterial metabolic activity by a biostat, under the conditions obtaining in oilfield water treating systems, its continuous application at an effective level is required. This is because it is expected that, during the period water is injected through the equipment in the absence of biostat, laydown of a biofilm containing SRB would take place that subsequent biostat application would not remove.

The present invention accordingly provides a method for controlling bacterial growth in oilfield equipment which comprises the application of a biocidally effective quantity of a biocide simultaneously with or followed by intermittent application of a biostat, the intermittent application comprising repeated cycles, each cycle containing a period at a first dose rate and a period at a second dose rate, the second dose rate being lower than the first, the length of cycle being at least 30 seconds and the period of application at the first dose rate being at least 20 seconds.

Advantageously, the intermittent application of the biostat follows the application of the biocide. The biocide is generally applied so as to reduce the activity of the bacteria present to meet the equipment operator's specification; it will be understood that in new or clean equipment the initial treatment with a biocide would be omitted. Advantageously, also, the intermittent application of the biostat is followed by application of an effective quantity of a biocide.

Preferably, the intermittent application is alternated with the application of a biocidally effective quantity of a biocide. The biocide may, for example, be applied at intervals of from two to fifteen days, advantageously once or twice weekly. The period of biocide application may be from 1 to 12 hours, preferably from 4 to 8 hours.

While it is within the scope of the invention to continue intermittent application of the biostat during application of the biocide this is presently not preferred. Further, while it is within the scope of the invention that during the application of the biostat its application is varied between any given lower and a higher rate, the lower rate is advantageously zero.

(There are references in EP-B-337624 to the "sequential" addition of control biocides (biostats), or "addition on a scheduled basis where small shots are added"; these references appear to relate to application of biostats during brief periods.)

The total biostat cycle time is generally within the range of 30 seconds to hours, advantageously up to 7 hours, more advantageously from 30 seconds to 2 hours, preferably from 2 to 20 minutes and most preferably about 5 minutes. Within the cycle, the ratio of time on : time off is advantageously within the range of from 5:1 to 1:10, more advantageously from 4:1 to 1:5, and preferably from 2:1 to 1:2. The length of the cycle and the on:off ratio may be varied over the period of application but are advantageously maintained constant once an appropriate regime for control has been established, thereby simplifying automatic operation in the field. Variation may also be desired or required in view of seasonal variations in bacterial levels, for example at times of seasonal bacteria "blooms".

Most preferably, the cycle has a period of about 5 minutes with an on:off ratio of 1:1 or 1:2.

Without wishing to be bound by any theory, the applicants believe that any bacteria surviving one period of treatment by the biostat may require a certain period to recommence normal reproduction and that intermittent treatment in accordance with the invention suffices to control bacteria as effectively as the previous continuous application. In any event, a result of the intermittent operation according to the invention is the possibility of bacteria control at a lower overall biostat usage.

The invention also provides the use of the method of the invention in oilfield equipment to effect bacterial activity control at reduced biostat usage.

Among biostats, there may be mentioned, for example, an isothiazolone, more especially one of the general formula 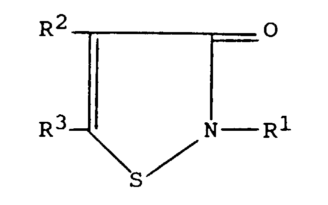 in which R¹ represents an alkyl or cycloalkyl group with up to 8 carbon atoms and R² and R³ independently represent hydrogen or a halogen. Preferably the isothiazolone is 5-chloro-2-methylisothiazolin-3-one, optionally in admixture with 2-methylisothiazolin-3-one. Other suitable biostats include those listed as biocides below at a lower treat rate.

The biostat may be used at a concentration dictated in part by the level of bacterial contamination or activity tolerable by the operator and the equipment characteristics, but a typical level lies in the range, expressed in terms of active ingredient concentration by mass of fluid, usually water, of 0.05 to 100 ppm, advantageously 0.3 to 10 ppm, more especially about 0.5 ppm.

Mixtures of biostats may be used, and the biostat may be used in admixture with, for example, a surfactant and biostats suitable for use against aerobic bacteria.

Among biocides, there may be mentioned, for example alkanedials, especially C₃ to C₈ alkane dials, for example, propane-, butane-, pentane-, and hexane-dial, especially pentanedial (glutaraldehyde); other quick-kill biocides include quaternary salts, e.g., ammonium or phosphonium halides, e.g., benzyl trialkylammonium halides, thiocyanates, bromine-nitrogen compounds, e.g., dibromonitrilo-propionamide, acrolein, amines, peroxy compounds, organo-sulphur compounds, dithiocarbamates, and biguanides. The biocide may be employed in conjunction with surfactants and other additives.

The biocide may be used at a concentration dictated in part by the degree of biofouling and the equipment characteristics but a typical level lies in the range of from 0.0001 to 1% of active ingredient based on the total mass of fluid, usually water, more especially from 50 to 1000 ppm.

It is appreciated that a given material may be both a biocide and a biostat, depending on, inter alia, the ambient conditions and its concentration and one that is a biocide at higher concentrations may be a biostat at lower concentrations. In the present invention, the material applied intermittently is one which, under the conditions of application, is a biostat and, similarly, the material used for slug application is, under its conditions of application, a biocide.

The following Examples in which, in Examples 1 to 3, no biocide is employed but the reduction in biostat consumption by intermittent application is demonstrated, illustrate the invention:

The tests described in the Examples below were caried out in a test rig similar to that described by R.S. Tanner et al in Conference Proceedings, U.K. Corrosion 85, Harrogate, U.K., November, 1985, 259, and briefly in EP-B-337624. The test compares the effectiveness of various treatments of bacteria-containing water, which is passed through a mild steel sampling tube inspected at intervals for bacterial contamination, the sulphide levels in the water being monitored daily.

Contamination by SRB was assessed by removing biofilm from a length of the mild steel tube, forming a suspension of the material, diluting it, and the SRB count determined with modified Postgate's medium B, using the most probable number technique, after incubation for 14 days. Sulphide levels were measured using the method described by Joel D. Cline, Limnology and Oceanography, 14, 1969, 454.

### Examples 1 to 3 and Comparison Examples A to D

In all Examples, de-oxygenated articial sea-water inoculated by bacteria from an oil production platform in the Norwegian sector of the North Sea was passed through the test rig together with nutrients (trypticase soy broth and sodium lactate at concentrations of 10 and 5 ppm) for 21 days; the day given as day 0 below is the 7th day of running the rig, to allow a biofilm to build up. Example A with no biocide or biostat provides base level measurements for use as control.

In Comparison Example B, the water was dosed continuously with an admixture of 5-chloro-2-methylisothiazolin-3-one and its unhalogenated counterpart at a ratio of 3:1 at a total concentration of 7 ppm.

In Comparison Example C, in addition to the continuous dosing of Example B, the biocide glutaraldehyde was applied for 1 hour every 7 days (on days 0, 7 and 14) at a concentration of 200 ppm.

In Comparison Example D, there was no addition of biostat, the biocide addition being as in Example C.

In Example 1, the biostat mixture used in Example B was used at the same concentration (7 ppm) but application was intermittent, 5 minutes on:5 minutes off, i.e., a ratio of 1:1.

In Example 2, the application procedure of Example 1 was varied to provide a cycle of 2.5 minutes on:5 minutes off, a ratio of 1:2.

In Example 3, the application procedure of Example 1 was varied to provide a cycle of 1 minute, 40 seconds on:5 minutes off, a ratio of 1:3.

In both Examples 2 and 3, the dose rate during the "on" period was 7 ppm, as in Example 1.

### Results

Table 1 shows the log₁₀ SRB values for each Example after 0, 7 and 14 days of testing. In Comparisons C and D, two values are given for each of the days shown, the first being before, and the second after, the batch treatment with glutaraldehyde.

**Table 1**

| Example | Treatment | log₁₀ SRB values on day | | |
|---|---|---|---|---|
| | | 0 | 7 | 14 |
| A | none | 6.37 | 6.58 | 7.17 |
| B | continuous biostat | 5.83 | 4.17 | 3.17 |
| C | cont. biostat | 6.17 | 2.58 | 2.58 |
| | + batch biocide | 1.58 | 0.83 | 1.83 |
| D | batch biocide | 6.83 | 7.52 | 5.83 |
| | | 2.58 | 2.07 | 3.17 |
| 1 | intermittent 1:1 | 7.07 | 4.58 | 3.17 |
| 2 | intermittent 1:2 | 6.83 | 5.17 | 4.83 |
| 3 | intermittent 1:3 | 6.37 | 6.17 | 6.17 |

Table 2 shows the sulphide levels in ppm in the exit water after various days of testing. The entry water was also tested on each day and the level was always less than 10 ppm. In Examples C and D, two values are given for days 7 and 14, as in Table 1.

**Table 2**

| Example | Sulphide values on day, ppm | | | | | | | | |
|---|---|---|---|---|---|---|---|---|---|
| | 0 | 1 | 2 | 6 | 7 | 8 | 11 | 13 | 14 |
| A | 295 | 245 | 200 | 265 | 275 | 255 | 170 | 460 | 310 |
| B | 290 | 45 | 11 | 12 | <10 | <10 | <10 | 12 | <10 |
| C | 210 | 40 | <10 | <10 | <10 | <10 | <10 | <10 | <10 |
| | | | | | <10 | | | | <10 |
| D | 245 | 115 | 115 | 285 | 265 | 135 | 165 | 260 | 285 |
| | | | | | 194 | | | | 240 |
| 1 | 215 | 10 | 12 | <10 | <10 | <10 | <10 | <10 | <10 |
| 2 | 265 | 45 | 45 | 27 | 12 | 34 | <10 | <10 | <10 |
| 3 | 190 | 71 | 24 | 17 | 19 | 33 | 34 | 30 | 14 |

The results show that as measured by SRB values continuous application of biostat (Example B) is matched by intermittent application at an on:off ratio of 1:1 (Example 1), representing a biostat saving of 50%. As measured by sulphide generation, intermittent application at an on:off ratio of 1:2 (Example 2) also matches continuous application after 8 days, a biostat saving of 66%. The results clearly show the savings available with intermittent biostat addition.

### Examples 4 & 5 and Comparison Examples E & F

Using the same procedures as in the previous Examples, including the use of the same biocide and biostats, the combination of batch-applied biocide and continuous application of biostat (Comparison E) was compared with the combinations of batch biocide and intermittent biostat application, 30 seconds on, 150 seconds off, a 1:5 ratio in Example 4, and 30 seconds on, 300 seconds off, a 1:10 ratio, in Example 5. In Comparison Example F, no biostat application took place. In all experiments, the batch biocide was applied for 1 hour every 5 days, at day 0 at 500 ppm, at day 5 1000 ppm, and at day 10 at 1500 ppm, while the biostat was applied at 7 ppm, whether continuous or intermittent.

### Results

Table 3 shows the log₁₀ SRB values for each Example after 0, 5, 10 and 13 days of testing. At days 0, 5 and 10 two values are given, the first being before, and the second after, batch treatment with glutaraldehyde.

**Table 3**

| Example | Treatment | log₁₀ SRB values on day | | | |
|---|---|---|---|---|---|
| | | 0 | 5 | 10 | 13 |
| E | batch/ | 6.58 | 6.17 | 6.58 | 6.17 |
| | continuous | 5.37 | 0 | 0 | |
| | | | | | |
| F | batch only | 5.83 | 6.83 | 7.58 | 7.17 |
| | | 5.83 | 2.17 | 5.58 | |
| | | | | | |
| 4 | batch/ | 6.17 | 7.37 | 7.17 | 6.83 |
| | intermittent 1:5 | 5.17 | 2.51 | 0 | |
| | | | | | |
| 5 | batch/ | 6.37 | 7.37 | 7.58 | 7.37 |
| | intermittent 1:10 | 5.37 | 0 | 0 | |

The results show that continuous application of biostat is matched by intermittent application even at an on:off ratio of 1:10, a substantial saving. Day 0, as in the previous experiments, was the 7th day of running bacteria-contaminated water through the rig. The results show that the combination of biocide and biostat addition, whether slug/continuous or slug/intermittent, appears to affect the nature of the biofilm, making the biocide slug application more effective, the levels in Comparison E and Examples 4 and 5 at days 5 and 10 immediately after application of biocide being generally lower than in Comparison F.

## Claims

1. A method for controlling bacterial growth in oilfield equipment which comprises the application of a biocidally effective slug dose of a biocide and intermittent application of a biostat, the intermittent application comprising repeated cycles, each cycle containing a period at a first dose rate and a period at a second dose rate, the second dose rate being lower than the first, the length of cycle being at least 30 seconds and the period of application at the first dose rate being at least 20 seconds.

2. A method as claimed in claim 1, wherein the second dose rate is a zero dose rate.

3. A method as claimed in claim 1 or claim 2, wherein the length of the cycle is from 30 seconds to 2 hours, advantageously from 2 to 20 minutes, and preferably about 5 minutes.

4. A method as claimed in any one of claims 1 to 3, wherein the first dose rate during a given period is constant.

5. A method as claimed in any one of claims 1 to 4, wherein the ratio of the lengths of the period at the first dose rate to the period at the second dose rate is within the range of from 5:1 to 1:10, advantageously within the range of from 4:1 to 1:5, and preferably within the range of from 2:1 to 1:2.

6. A method as claimed in claim 2, wherein the cycle lasts about 5 minutes and the on:off ratio is about 1:1 or 1:2.

7. A method as claimed in any one of claims 1 to 6, wherein the equipment is oil formation waterflooding equipment and the method comprises intermittent incorporation of the biostat in the water.

8. A method as claimed in claim 7, wherein the biostat is applied at a concentration within the range of 0.05 to 100 ppm, advantageously from 0.3 to 10 ppm, by weight, based on the weight of water.

9. A method as claimed in any one of claims 1 to 8, wherein the biostat is an isothiazolone of the general formula 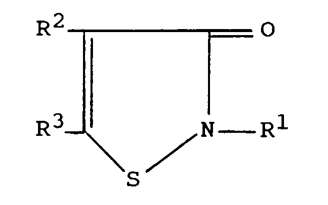 in which R¹ represents an alkyl or cycloalkyl group with up to 8 carbon atoms, and R² and R³ independently represent hydrogen or halogen, advantageously 5-chloro-2-methylisothiazolin-3-one, preferably in admixture with 2-methylisothiazolin-3-one.

10. A method as claimed in any one of claims 1 to 9, wherein the biocide is an alkanedial, advantageously glutaraldehyde.

11. A method as claimed in claim 10, wherein the biocide is applied at intervals of from 2 to 15 days.

12. A method as claimed in claim 10 or claim 11, wherein the biocide is applied for from 1 to 12 hours.

13. The use of a biocidally effective slug dose of a biocide and intermittent application of a biostat, the intermittent application comprising repeated cycles, each cycle containing a period at a first dose rate and a period at a second dose rate, the second dose rate being lower than the first, the length of cycle being at least 30 seconds and the period of application at the first dose rate being at least 20 seconds in oilfield equipment to inhibit bacterial activity at reduced biostat usage.

14. The method as claimed in any one of claims 1 to 12 or the use as claimed in claim 13, wherein intermittent biostat application follows the slug dose of biocide.

## Patentansprüche

1. Verfahren zur Steuerung des Wachstums von Bakterien in einer Ölfeldausrüstung, bei dem man eine biozid wirksame Menge (slug dose) eines Biozids und intermittierend ein Biostatikum aufbringt, wobei das intermittierende Aufbringen sich wiederholende Zyklen umfaßt, wobei jeder Zyklus eine Periode bei einer ersten Dosisrate und eine Periode bei einer zweiten Dosisrate umfaßt, die zweite Dosisrate geringer als die erste Dosisrate ist, die Länge der Zyklen zumindest 30 Sekunden und die Periode der Anwendung bei der ersten Dosisrate zumindest 20 Sekunden beträgt.

2. Verfahren gemäß Einspruch 1, dadurch gekennzeichnet, daß die zweite Dosisrate eine Null-Dosisrate ist.

3. Verfahren gemäß Anspruch 1 oder Anspruch 2, dadurch gekennzeichnet, daß die Länge des Zyklus 30 Sekunden bis 2 Stunden, vorteilhaft 2 bis 20 Minuten und vorzugsweise etwa 5 Minuten beträgt.

4. Verfahren gemäß einem der vorhergehenden Ansprüche 1 bis 3, dadurch gekennzeichnet, daß die erste Dosisrate während einer vorgegebenen Periode konstant ist.

5. Verfahren gemäß einem der vorhergehenden Ansprüche 1 bis 4, dadurch gekennzeichnet, daß das Verhältnis der Längen der Periode mit der ersten Dosisrate zur Länge der Periode mit der zweiten Dosisrate innerhalb des Bereichs von 5:1 bis 1:10, vorteilhaft innerhalb des Bereichs von 4:1 bis 1:5 und vorzugsweise innerhalb des Bereichs von 2:1 und 1:2 liegt.

6. Verfahren gemäß Anspruch 2, dadurch gekennzeichnet, daß der Zyklus etwa 5 Minuten dauert und daß das Ein:Aus-Verhältnis etwa 1:1 oder 1:2 ist.

7. Verfahren gemäß einem der vorhergehenden Ansprüchel bis 6, dadurch gekennzeichnet, daß die Ausrüstung eine ölbildende Wasserflutausrüstung ist und das Verfahren das intermittierende Einbringen des Biostatikum in das Wasser umfaßt.

8. Verfahren gemäß Anspruch 7, dadurch gekennzeichnet, daß die Konzentration des Biostatikum im Bereich von 0,05 bis 100 ppm, vorteilhaft von 0,3 bis 10 ppm Gewichtsteile beträgt, bezogen auf das Gewicht des Wassers.

9. Verfahren gemäß einem der Ansprüche 1 bis 8, dadurch gekennzeichnet, daß das Biostatikum ein Isothiazolon der allgemeinen Formel ist 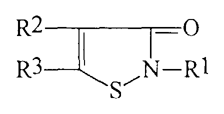 worin R¹ eine Alkyl- oder Cycloalkylgruppe mit bis zu 8 Kohlenstoffatomen darstellt und R² und R³ unabhängig Wasserstoff oder Halogen bedeuten, vorteilhaft 5-Chlor-2-methylisothiazolin-3-on, vorzugsweise in Mischung mit 2-Methylisothiazolin-3-on ist.

10. Verfahren gemäß einem der Ansprüche 1 bis 9, worin das Biozid ein Alkandial, vorzugsweise Glutaraldehyd ist.

11. Verfahren gemäß Anspruch 10, dadurch gekennzeichnet, daß das Biozid in Intervallen von 2 bis 15 Tagen angewendet wird.

12. Verfahren gemäß Anspruch 10 oder Anspruch 11, dadurch gekennzeichnet, daß das Biozid 1 bis 12 Stunden angewendet wird.

13. Verwendung einer biozid wirksamen Menge (slug dose) eines Biozids und intermittierendes Aufbringen eines Biostatikums, wobei das intermittierende Aufbringen sich wiederholende Zyklen umfaßt, wobei jeder Zyklus bei einer Periode einer ersten Dosisrate und eine Periode bei einer zweiten Dosisrate umfaßt, wobei die zweite Dosisrate geringer als die erste Dosisrate ist, die Länge des Zyklus zumindest 30 Sekunden und die Periode des Auftragens bei der ersten Dosisrate zumindest 20 Sekunden in einer Ölfeldausrüstung beträgt, um die bakterielle Aktivität bei reduzierter Biostatikumanwendung zu hemmen.

14. Verfahren gemäß einem der Ansprüche 1 bis 12 oder Verwendung gemäß Anspruch 13, dadurch gekennzeichnet, daß die intermittierende Anwendung eines Biostatikums einer Menge (slug dose) eines Biozids folgt.

## Revendications

1. Procédé pour combattre la croissance bactérienne dans un équipement d'un gisement de pétrole, qui comprend l'application d'une dose en bouchon d'un composé biocide efficace et l'application intermittente d'un biostat, l'application intermittente comprenant des cycles répétés, chaque cycle contenant une période présentant un premier débit de dose et une période présentant un deuxième débit de dose, le deuxième débit de dose étant inférieur au premier, la durée du cycle étant d'au moins 30 secondes et la période d'application avec le premier débit de dose étant d'au moins 20 secondes.

2. Procédé selon la revendication 1, dans lequel le deuxième débit de dose est un débit de dose nul.

3. Procédé selon l'une des revendications 1 ou 2, dans lequel la durée du cycle est comprise entre 30 secondes et 2 heures, de manière avantageuse entre 2 et 20 minutes, et est de préférence d'environ 5 minutes.

4. Procédé selon l'une quelconque des revendications 1 à 3, dans lequel le premier débit de dose pendant une période donnée est constant.

5. Procédé selon l'une quelconque des revendications 1 à 4, dans lequel le rapport des durées de la période présentant le premier débit de dose à la période présentant le deuxième débit de dose est compris entre 5:1 et 1:10, de manière avantageuse entre 4:1 et 1:5, et de préférence entre 2:1 et 1:2.

6. Procédé selon la revendication 2, dans lequel le cycle dure environ 5 minutes et le rapport marche:arrêt est d'environ 1:1 ou 1:2.

7. Procédé selon l'une quelconque des revendications 1 à 6, dans lequel l'équipement est un équipement d'injection d'eau pour la formation contenant du pétrole, le procédé comprenant l'incorporation intermittente du biostat dans l'eau.

8. Procédé selon la revendication 7, dans lequel le biostat est appliqué en une concentration comprise entre 0,05 et 100 ppm, de manière avantageuse entre 0,3 et 10 ppm en poids, par rapport au poids de l'eau.

9. Procédé selon l'une quelconque des revendications 1 à 8, dans lequel le biostat est une isothiazolone de formule générale 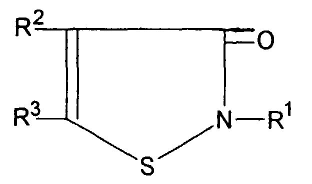 dans laquelle R¹ représente un groupe alkyle ou cycloalkyle ayant jusqu'à 8 atomes de carbone, et R² et R³ représentent indépendamment un hydrogène ou un halogène, sont de manière avantageuse de la 5-chloro-2-méthylisothiazoline-3-one, de préférence mélangée à de la 2-méthylisothizoline-3-one.

10. Procédé selon l'une quelconque des revendications 1 à 9, dans lequel le biocide est un alcanedial, de manière avantageuse du glutaraldéhyde.

11. Procédé selon la revendication 10, dans lequel le biocide est appliqué à des intervalles de 2 à 15 jours.

12. Procédé selon la revendication 10 ou la revendication 11, dans lequel le biocide est appliqué pendant une durée comprise entre 1 et 12 heures.

13. Utilisation d'une dose en bouchon d'un composé biocide efficace et application intermittente d'un biostat, l'application intermittente comprenant des cycles répétés, chaque cycle contenant une période présentant un premier débit de dose et une période présentant un deuxième débit de dose, le deuxième débit de dose étant inférieur au premier, la durée du cycle étant au moins de 30 secondes et la période d'application selon le premier débit de dose étant d'au moins 20 secondes dans l'équipement de gisement de pétrole, afin d'inhiber l'activité bactérienne avec une utilisation réduite de biostat.

14. Procédé selon l'une quelconque des revendications 1 à 12 ou utilisation selon la revendication 13, dans lesquels l'application intermittente de biostat suit la dose en bouchon du biocide.
